# EUROPEAN PATENT APPLICATION

(11) **EP 4 201 506 A1**
(43) Date of publication of application: **28.06.2023**
(21) Application number: 21217113.6
(22) Date of filing: 22.12.2021
(51) Int. Cl.: B01D 63/02, B25B 1/20, B25B 1/24, B25B 5/14, B25B 5/16, B01D 65/00

(54) **PROCESS FOR MAKING A FILTRATION AND/OR DIFFUSION DEVICE**

(71) Applicant: Gambro Lundia AB, 226 43 Lund (SE)
(72) Inventor: Baumeister, Franz, 88690 Unteruhldingen (DE); Hirssig, Christian, 72393 Burladingen (DE); Wiest, Jochen, 72401 Haigerloch-Gruol (DE)
(74) Representative: Perchenek, Nils

(57) **Abstract**

The present disclosure relates to a process for producing a filtration and/or diffusion device, e.g., a capillary dialyzer or an ultrafilter, and to devices used in the process.

## Description

### Technical Field

The present disclosure relates to a process for producing a filtration and/or diffusion device, e.g., a capillary dialyzer or an ultrafilter and to devices used in the process.

### Description of the Related Art

Common processes for manufacturing a capillary dialyzer involve producing a strand of hollow fiber membranes, cutting the strand to produce a bundle of hollow fiber membranes, transferring the bundle into a tubular housing, sealing the ends of the hollow fibers present in the bundle, closing the mouths of the housing with potting caps, potting both ends of the bundle with a potting agent to produce end wall means within the tubular housing that separate the outer surface of the hollow fiber membranes from their lumen, and re-opening the ends of the individual hollow fibers by cutting off a portion of the end walls. Conventionally, the ends of the bundle of hollow fiber membranes are cut off perpendicular to the longitudinal axis of the bundle to obtain a bundle having parallel end faces before transferring the bundle into a tubular housing.

WO 2013/190022 A1 discloses a capillary dialyzer with support rings disposed between the end wall means and the housing at the first and second ends of the tubular housing. The support rings are positioned on a ledge inside the tubular housing and are interlocked with the potting material forming the end wall means.

The ends of the hollow fiber membranes have to be sealed before potting the ends of the fiber bundle using a potting resin, e.g., a polyurethane. This is necessary to prevent the potting resin from being sucked into the hollow fibers by capillary forces, thus clogging the fibers. The hollow fiber membranes can be sealed by melting the ends of the individual fibers.

JP 2003/062433 A discloses a method for manufacturing a hollow fiber membrane module capable of efficiently performing the potting of the end part of a hollow fiber membrane bundle without infiltrating a potting agent into the hollow fiber membranes. In this manufacturing method, the hollow fiber membrane bundle is inserted into the cylindrical case so that the end part thereof protrudes from the cylindrical case; the end part is collapsed and sealed to be potted to the opening of the cylindrical case; and the collapsed and sealed part is subsequently cut off.

US 4 341 005 A discloses a process for the production of hollow fiber fluid fractionation cells which involves placing a series of half sections of the longitudinal walls of the cell on the periphery of a winding wheel; winding fluid-filled permeable hollow fibers thereabout until the section is full or slightly over-full; placing another mating half shell over each fiber-filled section on the wheel and assembling the cell core; cutting the courses between each section and draining the fluid therefrom; putting an initial fluid potting compound about the courses of fibers and centrifugally casting the potting compound about the fibers at each end of the cell; and cutting the fibers at each end within the area of the potting compound to re-expose the hollow cores thereof.

WO 2004/086554 A2 discloses a method and apparatus for manufacturing hollow fiber membrane filters which employs a non-contact heat source to melt the tips of the hollow fibers to prevent potting material from entering the fibers. A hot plate is moved into position opposite and very close to the ends of the fibers in a bundle and closed in on the face of the fiber bundle to melt the ends of all the fibers in the bundle and seal them.

It would be desirable to simplify the manufacturing process of filtration and/or diffusion devices, e.g., by eliminating one or more of the multiple steps required; or to streamline the manufacturing process by combining two or more of the process steps into a single process step.

### Summary

The present disclosure provides a process and devices used in making a filtration and/or diffusion device comprising a bundle of hollow fiber membranes in a tubular housing. The process involves melting the ends of a bundle of hollow fiber membranes, thereby sealing the orifices of the individual hollow fiber membranes within the bundle, and producing a bundle of defined length with parallel end faces which are perpendicular to the longitudinal axis of the bundle. A bundle reshaping device is configured to simultaneously melt both ends of a bundle of hollow fiber membranes.

### Brief Description of the Drawings

- Figure 1: is a schematic view of a stage of an embodiment of the process of the present disclosure involving a fixation unit and a bundle of hollow fiber membranes;
- Figure 2: is a schematic view of different stages of an embodiment of the process of the present disclosure involving a bundle reshaping device;
- Figure 3: is a schematic view of a further stage of an embodiment of the process of the present disclosure involving a bundle reshaping device.

### Detailed Description

The present disclosure provides a process for producing a filtration and/or diffusion device comprising hollow fiber membranes. Examples of filtration and/or diffusion devices include capillary dialyzers, hemofilters, plasma filters, and ultrafilters.

The present disclosure provides a process for the production of a filtration and/or diffusion device comprising a bundle of hollow fiber membranes disposed within a tubular housing, the process comprising melting a first end and a second end of a bundle of hollow fiber membranes, thereby sealing the orifices of the individual fibers within the bundle and producing a bundle of defined length with parallel end faces.

When a strand of hollow fiber membranes wound on a winding reel is cut to form bundles, bundles having at least one slanted end usually are obtained.

The length of the fibers in the bundle is greater than the length of the tubular housing of the filtration and/or diffusion device to be produced. In one embodiment, the length of the shortest fibers in the fiber bundle exceeds the length of the housing by 4 to 16 mm, for instance, 8 to 14 mm.

The composition of the hollow fiber membranes present in the bundle is not particularly limited. A large variety of membranes comprising thermoplastic polymers is suitable for use in the process of the present disclosure. Examples include polysulfone (PS), polyethersulfone (PES), polyamide (PA), and polyvinylidene fluoride (PVDF).In one embodiment, the fibers comprise a blend of at least one hydrophobic polymer and at least one hydrophilic polymer. In a particular embodiment, the fibers comprise a polysulfone, polyethersulfone, or polyarylethersulfone; in combination with a polyvinylpyrrolidone.

In one embodiment, the hollow fiber membranes have an inner diameter in the range of from 180 µm to 250 µm. In another embodiment, the inner diameter is in the range of from 185 µm to 195 µm. In still another embodiment, the inner diameter is in the range of from 210 µm to 220 µm.

In one embodiment, the wall thickness of the hollow fiber membranes is in the range of from 20 µm to 55 µm. In one embodiment, the wall thickness is 33 µm to 37 µm. In another embodiment, the wall thickness is 38 to 42 µm. In still another embodiment, the wall thickness is 43 µm to 47 µm. In yet another embodiment, the wall thickness is 48 µm to 52 µm.

The hollow fiber membranes can have a symmetric wall structure or an asymmetric wall structure. In one embodiment, the membrane wall has a symmetric sponge structure. In another embodiment, the membrane wall has an asymmetric sponge structure. In yet another embodiment of the process, the membrane wall has an asymmetric wall structure and comprises a layer having a finger structure, i.e., featuring macrovoids having a size of more than 5 µm.

In one embodiment, the number of fibers in the bundle of hollow fiber membranes ranges from 6,000 to 12,000, e.g. from 9,000 to 12,000. In one embodiment, the diameter of the bundle is in the range of from 20 to 50 mm, e.g., from 20 to 30 mm, or from 30 tom 45 mm. In most cases, the diameter of the bundle of hollow fiber membranes will correspond to the inner diameter of the tubular section of the housing of the filtration and/or diffusion device to be produced, i.e., the fibers of the bundle spread across the entire cross-section of the housing.

In an embodiment of the process, a sleeve is formed around the fiber bundle to stabilize the bundle and prevent it from falling apart into individual fibers. In a further embodiment, the sleeve is formed by wrapping a sheet of thermoplastic material, e.g., a polyolefin, around the circumference of the bundle and seal it by a longitudinal weld. In a further embodiment, the sleeve is formed by wrapping a sheet of paper or a plastic material around the circumference of the bundle and seal it by a longitudinal adhesive seam. The length of the sleeve is shorter than the length of the shortest fibers in the bundle and the sleeve does not cover the ends of the bundle. In one embodiment, the length of the shortest fibers in the fiber bundle exceeds the length of the sleeve by 4 to 16 mm, for instance, 8 to 14 mm.

In a first step of the process of the present disclosure, a bundle of hollow fiber membranes is provided. A first end and a second end of the bundle are constricted at positions near a first end and a second end of the shortest fibers within the hollow fiber bundle, respectively.

In one embodiment of the process, the bundle of hollow fiber membranes is constricted by elastic ribbons, straps, or sleeves.

In another embodiment of the process, the bundle of hollow fiber membranes is held within a fixation unit. The fixation unit features two brackets with moveable jaws. The brackets are spaced apart from each other, the distance between the brackets being approximately equal to the desired length of the finished fiber bundle.

To provide the bundle of hollow fiber membranes held within a fixation unit, a bundle of hollow fiber membranes is introduced into the fixation unit and the jaws of the fixation unit are moved from a starting position in which they are separated from each other (open configuration) into an end position in which the jaws of the fixation unit contact each other and define a cylindrical central void (closed configuration). In the closed configuration, the fixation unit constricts the fiber bundle at two positions near the two ends of the bundle, shaping its cross-section into a circle with reduced diameter, as compared to the rest of the fiber bundle. In one embodiment, the distance of the jaws of the fixation unit to the ends of the shortest fibers in the bundle is in the range of from 4 to 16 mm, for instance, from 8 to 14 mm.

In a subsequent step, the ends of the bundle of hollow fiber membranes are heated to melt the ends of the hollow fibers and shape the ends of the bundle into end faces parallel to each other and perpendicular to the longitudinal axis of the bundle. The length of the bundle is reduced to a predefined length in this step.

In one embodiment of the process, the ends of the bundle are subsequently melted and transformed into end faces perpendicular to the longitudinal axis of the bundle to obtain a bundle of defined length with parallel end faces. In another embodiment of the process, both ends of the bundle are simultaneously melted and transformed into end faces perpendicular to the longitudinal axis of the bundle to obtain a bundle of defined length with parallel end faces.

In one embodiment of the process, the bundle of hollow fiber membranes held within a fixation unit is introduced into a bundle reshaping device which simultaneously melts both ends of the bundle, transforms them into end faces perpendicular to the longitudinal axis of the bundle, and adjusts the length of the bundle to a desired predefined value.

The present disclosure also provides a bundle reshaping device for obtaining a bundle of hollow fiber membranes of defined length with parallel end faces.

The bundle reshaping device comprises two conveyor belts mounted on vertical drive rollers. Each conveyor belt forms a closed loop driven by a plurality of vertical drive rollers. The two conveyor belts are spaced apart from each other, a surface of each of the conveyor belts facing a surface of the respective other conveyor belt. The vertical drive rollers are configured to move both conveyor belts at the same speed.

In one embodiment of the device, the loop formed by a conveyor belt comprises three vertical drive rollers, a first vertical drive roller positioned at the entrance of the bundle reshaping device, a second vertical drive roller positioned at the exit of the bundle reshaping device, and a third vertical drive roller positioned inbetween the first and the second vertical drive roller, e.g., at an equal distance to the first and the second vertical drive roller. In another embodiment, more than three vertical drive rollers are present in the loop formed by each conveyor belt.

The conveyor belts are comprised of a heat-resistant material. In one embodiment, the conveyor belts are comprised of metal. In another embodiment, the conveyor belts are comprised of a heat-resistant polymer. In a further embodiment, the conveyor belts are comprised of a heat-resistant polymer with metal filaments embedded therein, or a metal mesh embedded therein to improve heat transfer. In one embodiment, the outer surface of the conveyor belts (the surface facing away from the vertical drive rollers the conveyor belt is mounted on) is comprised of a fluoropolymer, e.g., polytetrafluoroethylene (PTFE).

The conveyor belts together define a first and a second section of the bundle reshaping device. A vertical drive roller is positioned on the border between the first and the second section. In the first section of the bundle reshaping device, the distance between the conveyor belts steadily decreases from an initial value which is equal to or larger than the length of the longest fibers in the bundle of hollow fiber membranes to a final value which corresponds to the desired length of the bundle of hollow fiber membranes. In the second section of the bundle reshaping device, the distance between the conveyor belts remains constant, i.e. the surfaces of the two conveyor belts are parallel to each other.

In the first section of the bundle reshaping device, heating units are provided within the loop formed by each conveyor belt to heat the conveyor belts from their backside. The heating units are positioned between the vertical drive rollers of the first section.

In the second section of the bundle reshaping device, cooling units are provided within the loop formed by each conveyor belt to cool the conveyor belts from their backside. The cooling units are positioned between the vertical drive rollers of the second section.

In one embodiment of a process using the bundle reshaping device, a bundle of hollow fiber membranes held by a fixation unit is introduced into the bundle reshaping device at the start of the first section and is moved through the device in a direction perpendicular to the longitudinal axis of the bundle. The bundle is transported by the two conveyor belts moving at the same speed. On contact with the hot surface of the conveyor belts in the first section of the bundle reshaping device, the ends of the hollow fiber membranes within the bundle are melted and the length of the bundle is decreased, as the bundle proceeds through the first section. After the bundle has entered the second section of the bundle reshaping device, the melt formed on the ends of the bundle re-solidifies on contact with the cooled surface of the conveyor belts, as the bundle proceeds through the second section of the bundle reshaping device, forming end faces that are perpendicular to the longitudinal axis of the bundle and parallel to each other. As the two conveyor belts move at the same speed, the longitudinal axis of the bundle always is perpendicular to the surfaces of the two conveyor belts during the passage of the bundle through the second section of the bundle reshaping device.

At the exit of the bundle reshaping device, a bundle of hollow fibers with sealed ends is obtained which has the desired predefined length and features end faces which are parallel and perpendicular to the longitudinal axis of the bundle. The bundle then can be transferred into a tubular housing of a filtration and/or diffusion device.

Suitable tubular housings for filtration and/or diffusion devices are known in the art and are generally produced by injection molding. In one embodiment of the process, the housing is comprised of a transparent thermoplastic polymer. In one embodiment, the housing is comprised of polycarbonate. In another embodiment, the housing is comprised of polypropylene.

The tubular housing comprises a central tubular section and header sections at both ends of the central tubular section. In one embodiment, the diameter of the header sections is the same as the diameter of the tubular section. In another embodiment, the diameter of the header sections is larger than the diameter of the tubular section. The dimensions of the housing may vary over a range of different sizes. In one embodiment, the length of the housing is in the range of from 120 to 350 mm, for instance, from 130 to 170 mm, or from 240 to 300 mm. In one embodiment, the inner diameter of the housing is in the range of from 20 to 50 mm, e.g., from 20 to 30 mm, or from 30 tom 45 mm.

The tubular housing comprises at least one fluid port on its outer wall. The fluid port is configured to serve as a fluid inlet and/or a fluid outlet of the filtration and/or diffusion device. In one embodiment, the tubular housing comprises two fluid ports.

After the bundle has been transferred into the tubular housing, the mouths on both ends of the tubular housing are closed and a potting process can ensue. In one embodiment of the process, the mouths on both ends of the tubular housing are closed by potting caps.

In one embodiment of the process, the mouths of the tubular housing are sealed by dipping one end of the tubular housing into a melt of thermoplastic resin and allowing the melt to solidify; and then dipping the other end of the tubular housing into a melt of thermoplastic resin and allowing the melt to solidify. Upon solidification, the molten thermoplastic resin forms continuous polymer blocks which encase the ends of the bundle and also seal the mouths of the tubular housing, forming potting caps that prevent leakage of potting resin from the housing during the formation of the end wall means.

Suitable thermoplastic resins have a glass transition temperature which is lower than the glass transition temperature of both the tubular housing and the hollow fiber membranes present in the bundle. In one embodiment, the thermoplastic resin is a polyolefin. In a particular embodiment, the thermoplastic resin is polyethylene. In another embodiment, the thermoplastic resin is a polyester. Examples of suitable polyesters include polyethylene terephthalate (PET), polybutylene terephthalate (PBT). In a particular embodiment, the thermoplastic resin is a glycol-modified polyethylene terephthalate (PETG).

The initial temperature of the melt of thermoplastic resin in the dipping step, i.e., before the end of the tubular housing is immersed in the melt, is higher than the melting point of the thermoplastic resin, e.g., at least 20 K above the melting point, or at least 50 K, or even at least 100 K above the melting point.

In one embodiment, the depth of the melt is in the range of from 1 to 5 mm, e.g., from 1 to 3 mm. In one embodiment of the process, the melt of thermoplastic resin is provided in a crucible with a diameter which is slightly larger than the outer diameter of the tubular housing. In another embodiment of the process, the melt of thermoplastic resin is provided in a circular depression of a metal plate, the circular depression having a diameter which is slightly larger than the outer diameter of the tubular housing. In one embodiment, the circular depression has a depth in the range of from 2 to 10 mm.

In one embodiment of the process, the melt is provided in the crucible or the metal plate, respectively, by dosing a melt of the thermoplastic resin into the crucible or the circular depression of the metal plate, respectively. In one embodiment, the temperature of the melt is in the range of from 250°C to 360°C, e.g., in the range from 280°C to 320°C.

In another embodiment of the process, the melt is provided in the crucible or the metal plate, respectively, by dosing solid particles of the thermoplastic resin, e.g., a powder or a granulate, into the crucible or the circular depression of the metal plate, respectively, and melting the thermoplastic resin by heating the crucible or the circular depression of the metal plate, respectively. In one embodiment, the temperature of the crucible or the circular depression of the metal plate, respectively, is in the range of from 250°C to 360°C, e.g., in the range from 280°C to 320°C.

In one embodiment, the crucible or the metal plate, respectively, are comprised of stainless steel. In another embodiment, the crucible or the metal plate, respectively, are comprised of aluminum. In a particular embodiment, the crucible or the metal plate, respectively, are coated with a nonstick coating to facilitate demolding. In one embodiment, the coating is based on polytetrafluoroethylene (PTFE; Teflon^{®}); in another embodiment, the coating is a silica-based nonstick coating.

In one embodiment, the crucible or the metal plate, respectively, are provided with cooling elements or heat sinks, e.g., cooling coils attached to or embedded in the wall of the crucible or attached to or embedded in the metal plate, respectively. The cooling elements remove heat from the melt to accelerate its solidification after the end of the tubular housing has been immersed in the melt.

In another embodiment of the process, air or another inert fluid is introduced into the tubular housing of the filtration and/or diffusion device to cool down the melt after the end of the housing has been immersed in the melt. In one embodiment, the cooling fluid is introduced via at least one of the fluid ports of the tubular housing.

In one embodiment of the process, the ends of the tubular housing feature potting collars, i.e., a potting collar is mounted on each end of the tubular housing before dipping the ends of the tubular housing into the melt of thermoplastic resin.

A potting collar is a separate tubular component part that can be mounted on an end of the tubular housing and provides an extension of the housing in longitudinal direction. The potting collars enclose the ends of the bundle protruding from the housing. In one embodiment, the diameter of the potting collars is larger on one end of the collar than on the other end. In one embodiment, the larger diameter matches the outer diameter of the tubular housing and the smaller diameter matches the diameter of the bundle. In one embodiment, the inner surface of the potting collars is conical. In one embodiment, the potting collars extend the length of the housing by 5 to 10 mm on each end of the housing. In one embodiment, the ends of the bundle protrude from the mouths of the potting collars by 1 to 3 mm. In another embodiment, the ends of the bundle are flush with the mouths of the potting collars. The potting collars are comprised of a polymeric material, e.g., a thermoplastic resin. In one embodiment, the potting collars are comprised of a polyolefin, e.g., polyethylene. In a particular embodiment, the potting collars and the melt of thermoplastic resin comprise the same thermoplastic resin.

In one embodiment of the process, the mouth of the potting collar is dipped into the melt of thermoplastic resin and is sealed instead of the mouth of the tubular housing. The sealed potting collar replaces the potting form otherwise required for the subsequent potting step. In another embodiment of the process, a support ring is present in each header section of the tubular housing, i.e., at each end of the tubular housing, a support ring is disposed within the tubular housing. A support ring is a separate annular component part which can be mounted on a ledge inside the tubular housing. The support ring is comprised of a polymeric material. The support ring is disposed between the end wall means and the inner wall surface of the housing, enclosing the fiber bundle and centering the bundle in the header section of the housing. The support ring is embedded at least partially in the end wall means produced by potting the ends of the fiber bundle with potting resin.

In one embodiment, the support ring comprises a tubular projection extending from the support ring in the direction of the end of the tubular housing and protruding from the mouth of the tubular housing by 0 to 5 mm, e.g., 0 to 3 mm. The tubular projection provides a cylindrical hollow enclosing the bundle. In one embodiment, the support rings are comprised of a polyolefin, e.g., polypropylene. In a further embodiment, the material of the tubular projection is different from the material of the remainder of the support ring. For example, the body of the support ring is comprised of polypropylene, while the tubular projection is comprised of polyethylene.

In one embodiment, the ends of the bundle protrude from the mouths of the tubular projection of the support ring by 1 to 3 mm. In another embodiment, the ends of the bundle are flush with the mouths of the tubular projection of the support ring.

In one embodiment of the process, the mouth of the tubular projection of the support ring is dipped into the melt of thermoplastic resin and is sealed instead of the mouth of the tubular housing. The sealed tubular projection replaces the potting form otherwise required for the subsequent potting step.

The potting step involves the formation of end walls within the tubular housing by embedding the ends of the bundle in a potting resin, e.g., a polyurethane.

After the potting resin has set and the end walls have been formed, the ends of the potted bundle are cut off together with part of the solidified potting resin to re-open the ends of the hollow fiber membranes of the bundle.

In an embodiment of the process employing potting caps, part of the sealed potting caps is also cut off together with the ends of the potted bundle and part of the solidified potting resin; and the remaining parts of the potting caps are removed from the ends of the tubular housing they are mounted on.

In an embodiment of the process employing potting collars, part of the sealed potting collars is also cut off together with the ends of the potted bundle and part of the solidified potting resin; and the remaining parts of the potting collars are removed from the ends of the tubular housing they are mounted on.

In another embodiment of the process employing support rings with tubular projections, the parts of the sealed tubular projections protruding from the tubular housing are also cut off together with the ends of the potted bundle and part of the solidified potting resin.

Subsequently, an end cap featuring a fluid port is mounted on each end of the tubular housing to complete assembly of the filtration and/or diffusion device.

An advantage of the process of the present disclosure is that formation of a bundle of hollow fiber membranes having a desired predefined length and having parallel end faces which are perpendicular to the longitudinal axis of the bundle as well as closure of the ends of the hollow fiber membranes of the bundle are performed simultaneously in a single process step. In prior art processes, these steps are performed consecutively in two separate steps by first cutting the bundle to length and then closing the ends of the hollow fibers of the bundle. The process of the present disclosure therefore is simpler and faster than the prior art processes. Further, it does not involve a cutting step that produces particulate material which could contaminate the machinery and the filtration and/or diffusion devices produced.

It will be understood that the features mentioned above and those described hereinafter can be used not only in the combination specified but also in other combinations or on their own, without departing from the scope of the present invention.

The process and the devices of the present disclosure will now be further described referring to the attached figures.

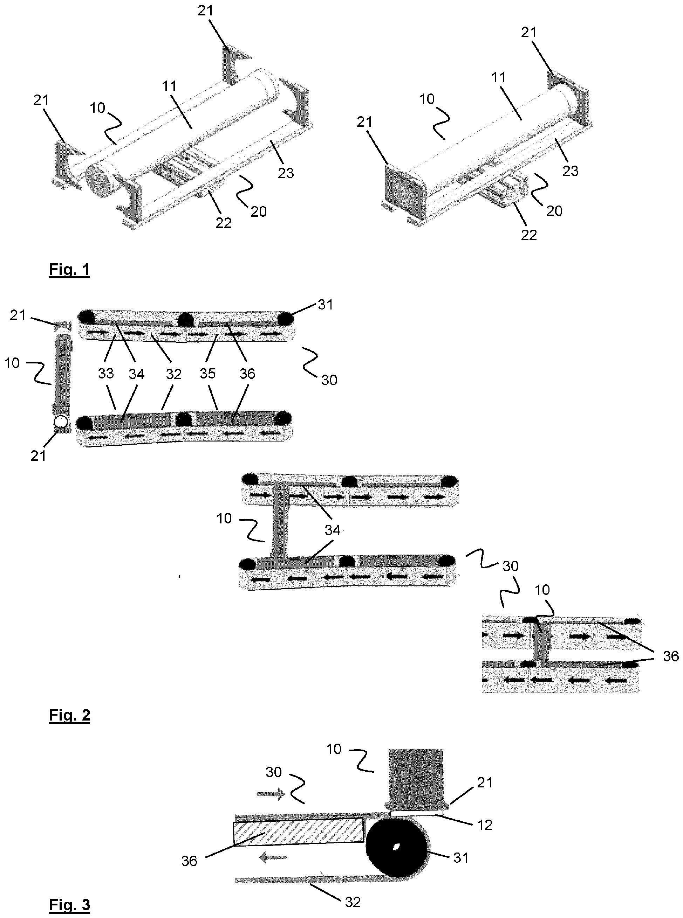

Figure 1 is a schematic perspective view of a stage of an embodiment of the process of the present disclosure involving a fixation unit 20 and a hollow fiber membrane bundle 10.

In the picture on the left side of Figure 1, a bundle 10 of hollow fiber membranes is shown. The middle section of the bundle 10 is enveloped by a sleeve 11 comprised of a thermoplastic material, e.g., a polyolefin. The sleeve 11 may be produced by wrapping a sheet of polymeric material around the bundle 10 of hollow fiber membranes. The sleeve 11 prevents the bundle 10 from dispersing into individual fibers.

A fixation unit 20 comprises two parallel brackets 21 positioned at the ends of bar-shaped mounts 23. The mounts 23 are parallel to each other and are slidable on a base plate 22 to open and close the brackets 21. The picture on the left side of Figure 1 shows the fixation unit 20 in an opened state, the picture on the right side of Figure 1 shows the fixation unit 20 in a closed state, with a bundle 10 of hollow fibers held near the ends of the bundle 10 by the brackets 21 of the fixation unit.

Figure 2 is a schematic perspective view of different stages of an embodiment of the process of the present disclosure involving a bundle reshaping device 30.

The bundle reshaping device 30 features two conveyor belts 32 driven by vertical drive rollers 31. In a first section 33 of the bundle reshaping device 30, the distance between the conveyor belts 32 continuously decreases from an initial value which is equal to or larger than the length of the longest fibers in the bundle 10 of hollow membrane fibers to a final value which corresponds to the desired length of the bundle 10 of hollow fibers. In a second section 35 of the bundle reshaping device 30, the distance between the conveyor belts 32 remains constant, i.e. the conveyor belts 32 are parallel to each other. In the first section 33, heating units 34 are provided to heat the conveyor belts 32 from their backside. In the second section 35, cooling units 36 are provided to cool the conveyor belts 32 from their backside.

The top left picture of Figure 2 shows a bundle 10 of hollow fiber membranes held by a fixation unit featuring two brackets 21. The bundle 10 is introduced into the bundle reshaping device 30 at the start of the first section 33 and is moved through the bundle reshaping device 30 in a direction perpendicular to the longitudinal axis of the bundle 10. The bundle is transported by the conveyor belts 32 moving at the same speed. The arrows indicate the direction of the movement of the conveyor belts 32.

The central picture of Figure 2 shows the bundle 10 in the first section 33 of the bundle reshaping device 30. On contact with the surface of the conveyor belts 32 heated by the heating units 34, the ends of the hollow fiber membranes within the bundle 10 are melted and the length of the bundle is decreased, as the bundle 10 proceeds through the first section 33 of the bundle reshaping device 30.

The bottom right picture of Figure 2 shows the bundle 10 in the second section 35 of the bundle reshaping device 30. The surface of the conveyor belts 32 is cooled from the backside by the cooling units 36. The melt formed on the ends of the bundle 10 re-solidifies, as the bundle 10 proceeds through the second section 35, forming end faces 12 that are perpendicular to the longitudinal axis of the bundle 10 and parallel to each other.

Figure 3 is a schematic top view of a further stage of an embodiment of the process of the present disclosure.

Figure 3 shows a partial top view of the bundle reshaping device 30 and a bundle 10 of hollow fiber membranes. The picture shows a part of the second section 35 of the bundle reshaping device 30, with a drive roller 31, a conveyor belt 32, and a cooling unit 36.

Figure 3 shows the bundle 10 held by a bracket 21 of a fixation unit exiting the bundle reshaping device 30. The end face 12 of the bundle 10, which has been formed by cooling and re-solidifying the melt formed on the ends of the bundle 10, is peeled off from the surface of the conveyor belt 32 as the belt 32 moves around the drive roller 31.

### List of reference signs

- 10: bundle of hollow fiber membranes
- 11: sleeve
- 12: end face
- 20: fixation unit
- 21: bracket
- 22: base plate
- 23: mount
- 30: bundle reshaping device
- 31: drive roller
- 32: belt
- 33: first section
- 34: heating unit
- 35: second section
- 36: cooling unit

## Claims

1. A process for producing a filtration and/or diffusion device comprising a bundle (10) of hollow fiber membranes in a tubular housing, the process comprising melting a first end and a second end of a bundle (10) of hollow fiber membranes, thereby sealing the orifices of the individual hollow fiber membranes within the bundle (10), and producing a bundle (10) of defined length and having parallel end faces (12) which are perpendicular to the longitudinal axis of the bundle (10).

2. The process of claim 1, wherein the first end and the second end of the bundle (10) are constricted at positions near a first end and a second end of the shortest fibers within the bundle (10) prior to melting the first end and the second end of the bundle (10).

3. The process of claim 1 or 2, wherein a sleeve (11) is formed around the bundle (10) prior to melting the first end and the second end of the bundle (10), the length of the sleeve (11) being shorter than the length of the shortest fibers in the bundle (10), and the sleeve (11) not covering the first end and the second end of the bundle (10)

4. The process of any one of claims 1 to 3, wherein the first end and the second end of the bundle (10) are melted simultaneously.

5. The process of any one of claims 2 to 4, wherein the first end and the second end of the bundle (10) are constricted using a fixation unit (20) comprising two parallel brackets (21) positioned at the ends of bar-shaped mounts (23) which are parallel to each other and are slidable on a base plate (22) to open and close the brackets (21).

6. The process of any one of claims 1 to 5, wherein the bundle (10) is moved through a bundle reshaping device (30) which simultaneously melts the first end and the second end of the bundle (10), transforms them into end faces (12) perpendicular to the longitudinal axis of the bundle (10), and adjusts the length of the bundle (10) to a desired predefined value.

7. The process of any one of claims 1 to 6, further comprising transferring the bundle (10) of defined length and having parallel end faces (12) which are perpendicular to the longitudinal axis of the bundle (10) into a tubular housing of a filtration and/or diffusion device.

8. The process of claim 7, further comprising closing the mouths on both ends of the tubular housing, and forming end walls within the tubular housing by embedding the ends of the fiber bundle (10) in a potting resin.

9. The process of claim 8, wherein the mouths on both ends of the tubular housing are closed by potting caps.

10. The process of claim 8, wherein the mouths on both ends of the tubular housing are closed by dipping one end of the tubular housing into a melt of thermoplastic resin and allowing the melt to solidify; and then dipping the other end of the tubular housing into a melt of thermoplastic resin and allowing the melt to solidify.

11. The process of claim 10, wherein a potting collar is mounted on each end of the tubular housing before dipping the ends of the tubular housing into the melt of thermoplastic resin.

12. The process of claim 10, wherein a support ring comprising a tubular projection extending from the support ring in the direction of the end of the tubular housing and protruding from the mouth of the tubular housing by 0 to 5 mm is mounted on each end of the tubular housing before dipping the ends of the tubular housing into the melt of thermoplastic resin.

13. The process of any one of claims 7 to 12, further comprising cutting off the ends of the potted bundle (10) together with part of the solidified potting resin to re-open the ends of the hollow fiber membranes of the bundle (10).

14. The process of claim 13, further comprising mounting an end cap featuring a fluid port on each end of the tubular housing.

15. A bundle reshaping device (30) comprising two conveyor belts (32) mounted on vertical drive rollers (31), wherein each conveyor belt (32) forms a closed loop driven by a plurality of vertical drive rollers (31), and wherein the two conveyor belts (32) are spaced apart from each other, a surface of each of the conveyor belts (32) facing a surface of the respective other conveyor belt (32), the two conveyor belts (32) together defining a first section (33) and a second section (35) of the bundle reshaping device (30), and wherein each conveyor belt (32) comprises at least one heating unit (34) within the first section (33) and at least one cooling unit (36) within the second section (35).
